# EUROPEAN PATENT APPLICATION

(11) **EP 4 560 791 A1**
(43) Date of publication of application: **28.05.2025**
(21) Application number: 24205631.5
(22) Date of filing: 09.10.2024
(51) Int. Cl.: H01M 10/6551, H01M 50/103, H01M 50/119, H01M 50/131, H01M 50/249

(54) **POWER STORAGE DEVICE AND POWER STORAGE DEVICE COOLING STRUCTURE**

(30) Priority: 24.11.2023 JP 2023198898
(71) Applicant: Prime Planet Energy & Solutions, Inc., Chuo-ku, Tokyo 103-0022 (JP)
(72) Inventor: FUJIMURA, Satoshi, Tokyo, 103-0022 (JP)
(74) Representative: Kuhnen & Wacker Patent- und Rechtsanwaltsbüro PartG mbB

(57) **Abstract**

A battery 1 includes an electrode body (40) and a metal case (10) housing this electrode body (40). The case (10) has a case outer surface (11) exposed outside. The case outer surface (11) includes a heat release part (18) that faces a cooling surface (130m) of a cooler (130) and dissipates heat toward the cooling surface (130m) via a thermally-conductive material (140). The heat release part (18) of the case outer surface (11) includes an area-increase portion (19) formed with numerous protrusions (19t) and numerous pits (19v) by an area increasing treatment, increasing the specific surface area (Sb).

## Description

### BACKGROUND

### Technical field

The disclosure relates to a power storage device in which a case outer surface of a case includes a heat release part, which faces a cooling surface of a cooler and dissipates or releases heat toward the cooling surface via a thermally-conductive material, and a power storage device cooling structure provided with this power storage device.

### Related Art

Conventionally, battery packs each provided with batteries, a cooler for cooling the batteries, and a thermally-conductive material (e.g., thermally-conductive grease and thermally-conductive sheet), which is interposed between the batteries and the cooler to transfer the heat of the batteries to the cooler, are known. One example of the related conventional arts is Patent document 1 (see FIG. 2 and others).

### Patent Documents

Patent Document 1: Japanese unexamined patent application publication No. 2023-046725 (JP 2023-046725A)

### SUMMARY

### Technical Problems

However, in the conventional battery pack, the case of each battery does not conduct heat to the thermally-conductive material sufficiently, making it difficult to cool each battery appropriately.

The present disclosure has been made to address the above problems and has a purpose to provide a power storage device configured to sufficiently conduct heat from a case of the power storage device to a thermally-conductive material, and a power storage device cooling structure provided with this power storage device.

### Means of Solving the Problems

(1) To achieve the above-mentioned purpose, one aspect of the present disclosure provides a power storage device comprising: an electrode body; and a case made of metal, in which the electrode body is housed, the case has a case outer surface exposed to outside, the case outer surface includes a heat release part, which faces a cooling surface of a cooler and dissipates heat of the electrode body toward the cooling surface via a thermally-conductive material, characterized in that the heat release part of the case outer surface includes an area-increase portion with numerous protrusions and numerous pits formed by an area increasing treatment to increase a specific surface area of the area-increase portion.

In the above-described power storage device, the heat release part of the case outer surface of the power storage device includes the area-increase portion that is formed with numerous protrusions and numerous pits by the area increasing treatment and thus has an increased specific surface area compared to a specific surface area before the treatment. Thus, the heat release part of the power storage device and the thermally-conductive material can contact each other over a large contact area, compared to the configuration that the heat release part has no area-increase portion. This allows for excellent heat conduction from the heat release part of the power storage device to the thermally-conductive material, compared to the case where the heat release part has no area-increase portion.

The "power storage device" may include, for example, secondary batteries, such as lithium-ion secondary batteries, sodium-ion secondary batteries, calcium-ion secondary batteries, and capacitors, such as lithium-ion capacitors.

The "area increasing treatment" may include, for example, physical surface roughening treatments such as shot blasting, sand blasting, and metal spraying, chemical surface roughening treatments such as anodic oxidation, and chemical etching, and surface roughening treatments that form nano-order protrusions and pits by pulsed laser irradiation. Another example is an area increasing treatment that forms an area-increase portion with numerous protrusions and numerous pits by pressing.

The area-increase portion may be formed in only a part of the heat release part of the case outer surface or in the entire heat release part. Further, the case outer surface may also be formed, on any portion except for the heat release part, with numerous protrusions and numerous pits similar to the numerous protrusions and numerous pits of the area-increase portion.

The "thermally-conductive material" may include, for example, thermally conductive grease applied in a layer, a thermally conductive gel sheet, and a thermally conductive resin sheet made by applying a liquid resin material in a layer and hardening this resin material.

The "cooler" may include, for example, a cooler internally having a cooling channel (i.e., a flow passage) and being configured to distribute a cooling medium, such as cooled air or coolant liquid.

(2) The power storage device described in (1) may be configured such that the case has a case inner surface exposed to inside, the case inner surface includes an electrode close-contact portion that is in direct or indirect close-contact with the electrode body, and the specific surface area of the area-increase portion of the case outer surface is larger than a specific surface area of the electrode close-contact portion of the case inner surface.

In the foregoing power storage device, the electrode close-contact portion of the case inner surface is in close contact with the electrode body, so that even if the specific surface area of the electrode close-contact portion is small, the electrode close-contact portion can transfer the heat of the electrode body to the case appropriately.

Meanwhile, when a power storage device cooling structure provided with the cooler and the thermally-conductive material is made by incorporating one power storage device or multiple power storage devices described above, the posture (tilt) of the power storage device may vary among the power storage device cooling structures or between the power storage devices included in each power storage device cooling structure. This may also cause variations in size of a gap between the heat release part of the case outer surface and the cooling surface of the cooler. This causes variations in the ease of heat transfer, i.e., the ease of heat release, from the case to the thermally-conductive material, which hinders heat dissipation. It is therefore preferable to increase the specific surface area of the area-increase portion of the case outer surface, compared to the specific surface area of the electrode close-contact portion of the case inner surface, and increase the contact area between the heat release part of the case outer surface and the thermally-conductive material to improve heat conduction from the heat release part to the thermally-conductive material.

(3) In the power storage device described in (1) or (2), only at least a part of the heat release part of the case outer surface may be subjected to the area increasing treatment.

In the foregoing power storage device, any portion of the case outer surface, except for the heat release part, does not need to be subjected to the area increasing treatment. The power storage device can be achieved at low costs while ensuring heat dissipation from the power storage device to the thermally-conductive material.

(4) Another aspect of the disclosure provides a power storage device cooling structure comprising: the power storage device described in any one of (1) to (3), the cooler; and the thermally-conductive material interposed between the heat release part of the case outer surface and the cooling surface of the cooler, characterized in that the numerous protrusions of the area-increase portion bite into the thermally-conductive material, and the thermally-conductive material bites into the numerous pits of the area-increase portion, increasing a contact area between the heat release part of the power storage device and the thermally-conductive material.

In the foregoing power storage device cooling structure, the numerous protrusions formed in the area-increase portion bite into the thermally-conductive material and also the thermally-conductive material bites into the numerous pits formed in the area-increase portion, thereby increasing the contact area between the heat release part of the power storage device and the thermally-conductive material. This structure allows for excellent heat conduction from the heat release part of the power storage device to the thermally-conductive material and hence can cool the power storage device appropriately.

### BRIEF DESCRIPTION OF THE DRAWINGS

FIG. 1 is a perspective view of a battery in an embodiment;
FIG. 2 is a bottom view of the battery in the embodiment;
FIG. 3 is a cross-sectional view of the battery in a battery height direction and a battery thickness direction in the embodiment;
FIG. 4 is a partial cross-sectional view of a battery pack in a vertical direction and an arrangement direction in the embodiment; and
FIG. 5 is an enlarged cross-sectional view of a part A of the battery pack in FIG. 4 in the embodiment.

### DETAILED DESCRIPTION OF THE EXEMPLARY EMBODIMENTS

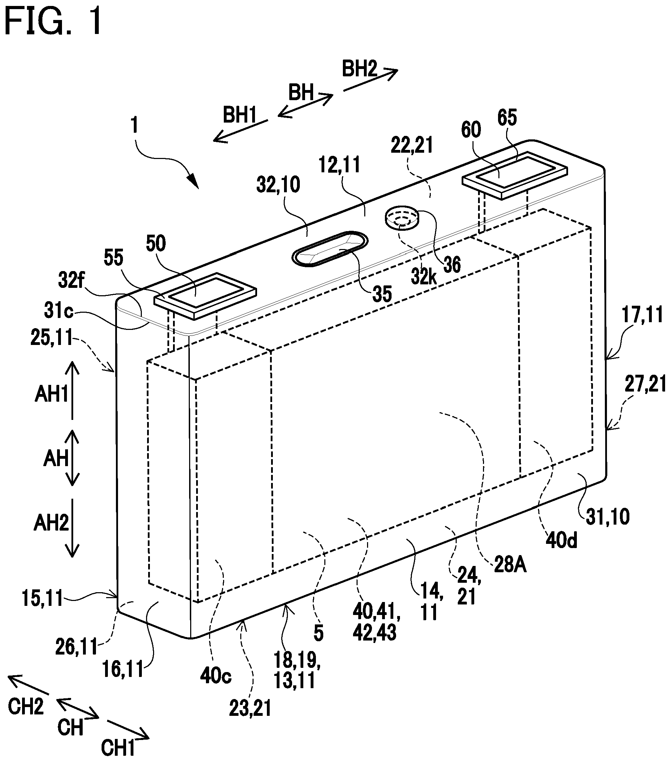

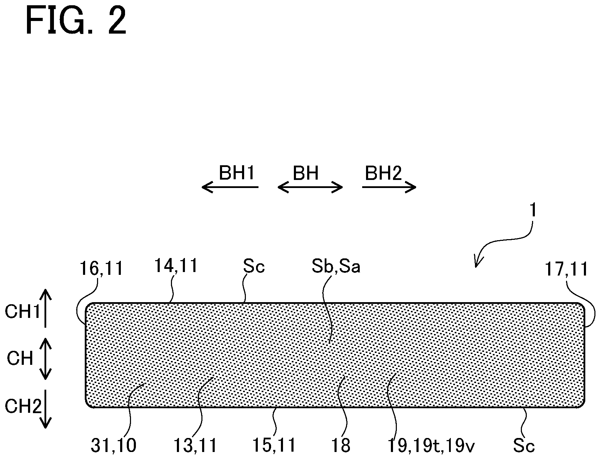

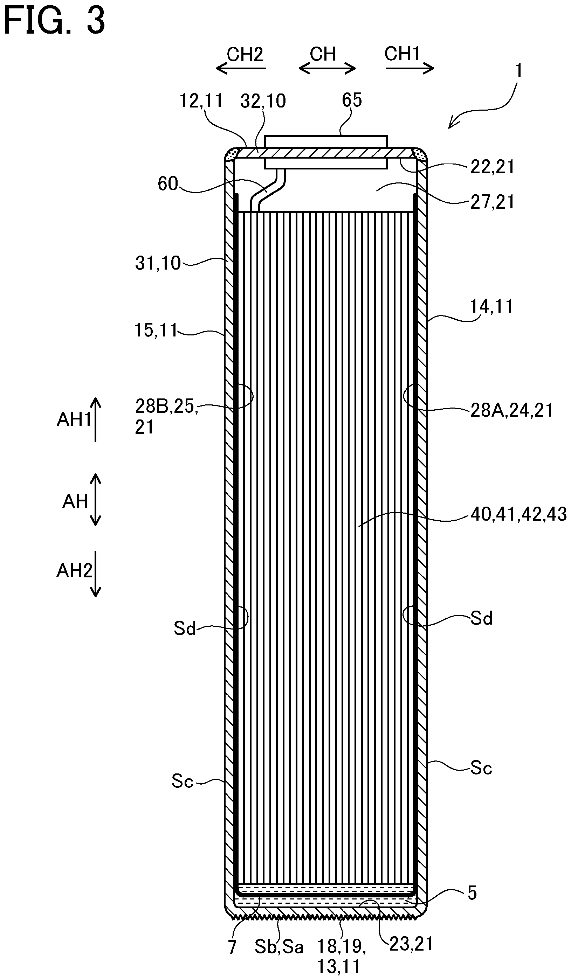

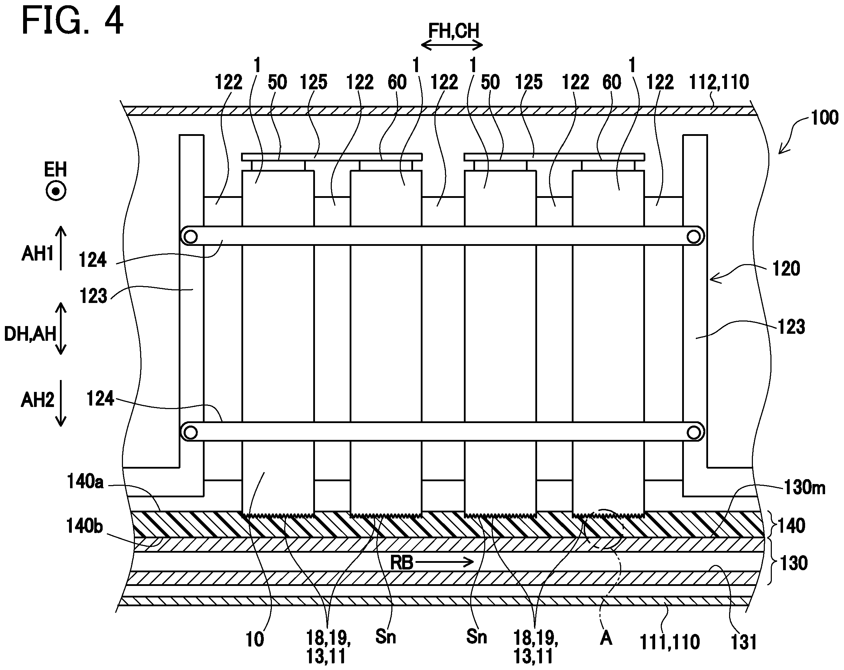

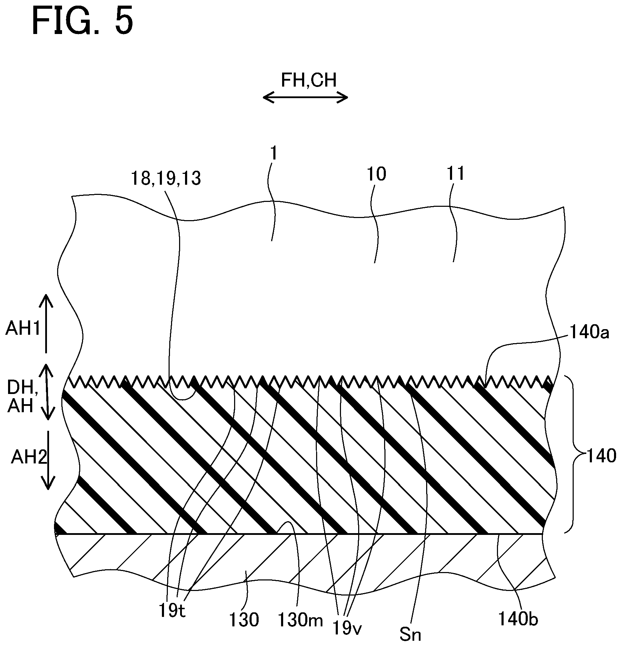

A detailed description of an embodiment of this disclosure will now be given referring to the accompanying drawings. FIG. 1 is a perspective view of a battery 1, which is one example of a power storage device of the disclosure, in this embodiment. FIG. 2 is a bottom view and FIG. 3 is a cross-sectional view of the battery 1 in a battery height direction and a battery thickness direction. Further, FIG. 4 is a partial cross-sectional view of a battery pack 100, which is one example of a power storage device cooling structure of the disclosure. FIG. 5 is an enlarged cross-sectional view of a part A of the battery pack 100 in FIG. 4. In this embodiment, the battery height direction AH, the battery width direction BH, and the battery thickness direction CH of the battery 1 are defined as the directions indicated by arrows in FIGs. 1 to 3, and the vertical direction DH, the lateral direction EH, and the arrangement direction FH of the battery pack 100 are defined as the directions indicated by arrows in FIGs. 4 and 5.

The battery pack 100 will be mounted in vehicles, such as hybrid cars, plugin hybrid cars, and electric cars. The battery pack 100 includes a plurality of batteries 1. Each of the batteries 1 is a sealed lithium ion secondary battery having a prismatic shape, i.e., a rectangular parallelepiped box-like shape, and composed of a case 10, an electrode body 40 and an electrolyte 5 housed in the case 10, a positive terminal 50 and a negative terminal 60 supported in the case 10, and others (see FIGs. 1 to 3). The electrode body 40 is enclosed in an insulation holder 7 made of a pouch-shaped insulating film that opens on the upper side AH1 in the battery height direction AH.

The case 10 is made of metal (aluminum in the present embodiment) and formed in a rectangular parallelepiped box-like shape, and composed of a case body 31 and a case lid 32. The case body 31 has a bottomed rectangular prismatic shape with a rectangular opening portion 31c, in which the electrode body 40 is housed. The case lid 32 has a rectangular plate-like shape and closes the opening portion 31c of the case body 31. The opening portion 31c of the case body 31 and a peripheral portion 32f of the case lid 32 are hermetically welded together over their entire circumference. The case lid 32 is provided with a safety valve 35, which can break open when the internal pressure of the case 10 exceeds a valve opening pressure. The case lid 32 is further provided with a liquid inlet 32k, which is hermetically sealed with a sealing member 36 made of aluminum in a circular disk shape.

The case lid 32 is further provided with rectangular through holes, not shown, near ends on the one side BH1 and the other side BH2 in the battery width direction BH. In the through hole on the one side BH1, the positive terminal 50 made of aluminum is inserted, and fixed to the case lid 32 while being insulated from the case lid 32 via a resin member 55. The positive terminal 50 is welded to a positive current collector part 40c, mentioned later, of the electrode body 40 inside the case 10 and thus conductively connected to the positive current collector part 40c. In the through hole on the other side BH2, the negative terminal 60 made of copper is inserted, and fixed to the case lid 32 while being insulated from the case lid 32 via a resin member 65. The negative terminal 60 is welded to a negative current collector part 40d, mentioned later, of the electrode body 40 inside the case 10 and thus conductively connected to the negative current collector part 40d.

The electrode body 40 is a rectangular parallelepiped, stacked electrode body, in which a plurality of rectangular positive electrode plates 41 and a plurality of rectangular negative electrode plates 42 are alternately stacked in the battery thickness direction CH with rectangular separators 43 each made of porous resin film interposed therebetween. In the electrode body 40, on the one side BH1 in the battery width direction BH, the positive current collector part 40c is formed by stacking current collecting foils as part of the positive electrode plates 41 in the battery thickness direction CH. This positive current collector part 40c is conductively connected to the positive terminal 50. Further, in the electrode body 40, on the other side BH2 in the battery width direction BH, the negative current collector part 40d is formed in which current collecting foils of the negative electrode plates 42 overlap one another in the battery thickness direction CH. This negative current collector part 40d is conductively connected to the negative terminal 60.

Next, a case outer surface 11 of the case 10, exposed to the outside of the case 10, that is, facing outward, will be described in detail. The case outer surface 11 has an upper surface 12, lower surface 13, first wide side surface 14, second wide side surface 15, first narrow surface 16, and second narrow surface 17, each having a rectangular shape. The upper surface 12 is located on the upper side AH1 and the lower surface 13 is located on the lower side AH2. The first wide side surface 14, second wide side surface 15, first narrow surface 16, and second narrow surface 17 are all equal in the size in the battery height direction AH, but different in the size in the direction perpendicular to the battery height direction AH, that is, in the battery width direction BH or the battery thickness direction CH. Specifically, each size of the first wide side surface 14 and the second wide side surface 15 in the battery width direction BH is wider than each size of the first narrow surface 16 and the second narrow surface 17 in the battery thickness direction CH, and therefore the first wide side surface 14 and the second wide side surface 15 each have a larger area than each of the first narrow surface 16 and the second narrow surface 17. The first wide side surface 14 is located on the one side CH1 and the second wide side surface 15 is located on the other side CH2 in the battery thickness direction CH. The first narrow surface 16 is located on the one side BH1 and the second narrow surface 17 is located on the other side BH2 in the battery width direction BH.

The case outer surface 11 includes a heat release part 18 located facing a cooling surface 130m of a cooler 130, which will be described later (see FIGs. 4and5), and configured to dissipate heat toward the cooling surface 130m via a thermally-conductive member 140, which is one example of a thermally-conductive material of the disclosure. In the present embodiment, the entirety of the lower surface 13 of the case outer surface 11 corresponds to the heat release part 18. This heat release part 18 (i.e., the lower surface 13) includes, as at least a part, an area-increase portion 19, which is subjected to an area increasing treatment (metal spraying in the present embodiment), forming numerous protrusions 19t and numerous pits 19v as illustrated with dots in FIG. 2, so that the specific surface area Sb of the area-increase portion 19 after subjected to the area increasing treatment is increased from the specific surface area Sa before the area increasing treatment. In the present embodiment, the entirety of the heat release part 18 is the area-increase portion 19. The specific surface area Sb of this area-increase portion 19 may be about 3 to 20 times larger than the specific surface area Sa before the area increasing treatment (e.g., about 5 times in this embodiment; Sb/Sa = about 5). The specific surface area Sa and the specific surface area Sb can be obtained by measuring a BET specific surface area by the gas adsorption method using Kr gas.

In the present embodiment, the area-increase portion 19 described above is provided in only the heat release part 18 (i.e., the lower surface 13) of the case outer surface 11. In other words, no protrusions 19t and no pits 19v exist in the upper surface 12, first wide side surface 14, second wide side surface 15, first narrow surface 16, and second narrow surface 17. Therefore, the specific surface area Sc of each of the upper surface 12, first wide side surface 14, second wide side surface 15, first narrow surface 16, and second narrow surface 17 is equal to the specific surface area Sa of the area-increase portion 19 before the area increasing treatment, that is, Sc=Sa.

In the present embodiment, the area increasing treatment is performed by metal spraying, but not limited thereto and alternatively may be performed by a physical or chemical surface roughening treatment or a surface roughening treatment that forms nano-order protrusions and pits by irradiation of a pulsed laser beam. The surface roughening treatment using irradiation of a pulsed laser beam can increase the specific surface area Sb after the treatment particularly compared to, specifically, about 20 times larger than, the specific surface area Sa before the treatment.

Next, a case inner surface 21 of the case 10, exposed to the inside of the case 10, that is, facing inward, will be described in detail. The case inner surface 21 has an internal upper surface 22, internal lower surface 23, first internal wide side surface 24, second internal wide side surface 25, first internal narrow side surface 26, and second internal narrow side surface 27, each having a rectangular shape. The internal upper surface 22 is located on the upper side AH1 and the internal lower surface 23 is located on the lower side AH2. The first internal wide side surface 24 and second internal wide side surface 25 are larger in the size in the direction perpendicular to the battery height direction AH, i.e., in the battery width direction BH, than the size of the first internal narrow side surface 26 and second internal narrow side surface 27 in the battery thickness direction CH, and therefore the wide side surfaces 24 and 25 each have a wider area than the narrow side surfaces 26 and 27. The first internal wide side surface 24 is located on the one side CH1 and the second internal wide side surface 25 is located on the other side CH2 in the battery thickness direction CH. The first internal narrow side surface 26 is located on the one side BH1 and the second internal narrow side surface 27 is located on the other side BH2 in the battery width direction BH.

The case inner surface 21 includes a pair of electrode close-contact portions 28A and 28B that are in indirect close contact with the electrode body 40 via the insulation holder 7, i.e., that hold and press the electrode body 40 covered with the insulation holder 7 in the battery thickness direction CH. One electrode close-contact portion 28A corresponds to a rectangular central portion of the first internal wide side surface 24 of the case inner surface 21, except for the peripheral portion of the first internal wide side surface 24. The other electrode close-contact portion 28B corresponds to a rectangular central portion of the second internal wide side surface 25 of the case inner surface 21, except for the peripheral portion of the second internal wide side surface 25.

The entire case inner surface 21 including the electrode close-contact portions 28A and 28B is not subjected to the area increasing treatment, unlike the area-increase portion 19 of the case outer surface 11, and thus no protrusions 19t and no pits 19v exist in the case inner surface 21. Accordingly, the specific surface area Sd of each of the electrode close-contact portions 28A and 28B of the case inner surface 21 is equal to the specific surface area Sc of each portion of the case outer surface 11 except for the area-increase portion 19 (i.e., the lower surface 13) and the specific surface area Sa of the area-increase portion 19 before the area increasing treatment (Sd = Sc = Sa). In the present embodiment, therefore, the specific surface area Sb of the area-increase portion 19 of the case outer surface 11 is about five times larger than the specific surface area Sd of each of the electrode close-contact portions 28A and 28B of the case inner surface 21 (Sb/Sd = about 5). The specific surface area Sb of the area-increase portion 19 may be set to about 3 to 20 times larger than the specific surface area Sd of each electrode close-contact portion 28A and 28B.

In the foregoing battery 1, the heat release part 18 of the case outer surface 11 includes the area-increase portion 19 in which numerous protrusions 19t and numerous pits 19v are formed by the area increasing treatment, providing the specific surface area Sb larger than the specific surface area Sa before the treatment. This allows the heat release part 18 of the battery 1 to contact with a thermally-conductive member 140, mentioned later, over a wide contact area Sn, compared to a heat release part 18 including no area-increase portion 19. Therefore, heat conduction from the heat release part 18 of the battery 1 to the thermally-conductive member 140 can be enhanced as compared with the case where the heat release part 18 includes no area-increase portion 19.

In the present embodiment, the electrode close-contact portions 28A and 28B of the case inner surface 21 each tightly contact the electrode body 40 and hence can appropriately transfer the heat of the electrode body 40 to the case 10 even if the specific surface area Sd of each of the electrode close-contact portions 28A and 28B is small.

Meanwhile, when the battery pack 100 mentioned later is made by incorporating two or more batteries 1, the posture (tilt) of the battery 1 varies among the batteries 1 included in the battery pack 100, for example, a gap between the heat release part 18 of the case outer surface 11 of each battery 1 and the cooling surface 130m of the cooler 130 also can vary in size. This causes variations in the ease of heat transfer, i.e., the ease of heat release, from the case 10 to the thermally-conductive member 140, which hinders heat dissipation. It is therefore preferable to increase the specific surface area Sb of the area-increase portion 19 of the case outer surface 11, compared to the specific surface area Sd of each electrode close-contact portion 28A and 28B of the case inner surface 21, and increase the contact area Sn between the heat release part 18 of the case outer surface 11 and the thermally-conductive member 140 to improve heat conduction from the heat release part 18 to the thermally-conductive member 140.

In the present embodiment, only the heat release part 18 of the case outer surface 11 is subjected to the area increasing treatment. Portions of the case outer surface 11 other than the heat release part 18 do not need to be subjected to the area increasing treatment. Thus, the battery 1 can be achieved at low costs while ensuring heat dissipation from the battery 1 to the thermally-conductive member 140.

Next, the battery pack 100 including more than one battery 1 described above will be described below, referring to FIGs. 4 and 5. The battery pack 100 is provided with a pack case 110, a battery module 120 housed in this pack case 110 and including the batteries 1, and a cooler 130 housed in the pack case 110 and used to cool each of the batteries 1 of the battery module 120. The thermally-conductive member 140 is placed between the batteries 1 of the battery module 120 and the cooler 130.

The pack case 110 is made of aluminum. This pack case 110 has a lower case 111 in which the battery module 120, cooler 130, and thermally-conductive member 140 are housed, and an upper case 112 located on the top of and fixed to the lower case 111.

The battery module 120 is placed in the pack case 110 in such a posture that the battery height direction AH of each of the batteries 1 corresponds to the vertical direction DH of the battery pack 100, the battery width direction BH of each battery 1 corresponds to the lateral direction EH of the battery pack 100, and the battery thickness direction CH of each battery 1 corresponds to the arrangement direction FH of the battery pack 100. This battery module 120 is composed of the batteries 1 and a plurality of intervening members 122, which are alternately stacked, and a pair of end plates 123 placed on both ends in the stacking direction (i.e., the arrangement direction FH) of the batteries 1 and the intervening members 122. They are integrally bound in a pressed state in the arrangement direction FH with a plurality of binding members 124 extending between the end plates 123. The positive terminal 50 of one battery 1 is electrically connected to the negative terminals 60 of the other battery 1 adjacently arranged in the arrangement direction FH via a busbar 125, which is one example of an electrically-conductive connection member of the disclosure, so that the batteries 1 constituting the battery module 120 are connected in series. Each busbar 125 is weldbonded to the corresponding positive terminal 50 and negative terminal 60.

Each of the intervening members 122 is made of insulation elastic material, e.g., ethylene propylene diene rubber (EPDM) in the present embodiment, and formed in a rectangular plate shape. The intervening members 122 are each interposed between adjacent two of the batteries 1 and in contact with the first wide side surfaces 14 of the adjacent batteries 1 or the second wide side surfaces 15 of the adjacent batteries 1. Further, the intervening members 122 are interposed between an endmost battery 1 in the arrangement direction FH and one of the end plates 123 and the other endmost battery 1 and the other end plate 123.

Each of the end plates 123 is provided with a plurality of fixing parts (not shown) for fixing the battery module 120 to the lower case 111. Thus, the end plates 123 are secured together with the cooler 130 to the lower case 111 with bolts and nuts (not shown). In this way, the cooler 130 is fixed between the battery module 120 and the lower case 111, and thus the lower surface 13 (i.e., the heat release part 18) of each of the batteries 1 of the battery module 120 faces the cooling surface 130m of the cooler 130 via the thermally-conductive member 140.

The cooler 130 is made of aluminum and formed in a rectangular plate shape extending in the arrangement direction FH, in which a flow passage (a cooling channel) 131 is formed extending in the arrangement direction FH. A cooling medium RB (which, in the present embodiment, is a cooling medium for a vehicle-mounted airconditioner) flows in this flow passage 131.

On the cooling surface 130m, which is the upper surface of the cooler 130, the rectangular plate-shaped thermally-conductive member 140 having a first main surface 140a and a second main surface 140b is placed. The thermally-conductive member 140 is in contact with the cooling surface 130m of the cooler 130 over the entirety of the second main surface 140b.

The cooler 130 is provided with a plurality of fixing parts (not shown) for fixing the cooler 130 to the lower case 111. Thus, the cooler 130 is secured together with the battery module 120 to the lower case 111 with the bolts and nuts (not shown), as described above.

The thermally-conductive member 140 is interposed between the lower surface 13 (i.e., the heat release part 18) of each battery 1 of the battery module 120 and the cooling surface 130m of the cooler 130, in which the first main surface 140a on one side faces the battery module 120, i.e., to the upper side AH1, and the second main surface 140b on the other side faces the cooler 130, i.e., to the lower side AH2. The thermally-conductive member 140 is a member for transferring the heat of the batteries 1 to the cooler 130; specifically, in the present embodiment, a thermally-conductive gel sheet is used.

Since the battery module 120 and the cooler 130 are fixed to the lower case 111 in the above-mentioned manner, the thermally-conductive member 140 is compressed in the thickness direction (i.e., the vertical direction DH and the battery height direction AH) between the lower surface 13 (i.e., the heat release part 18) of each of the batteries 1 and the cooling surface 130m of the cooler 130. Then, the numerous protrusions 19t formed in the heat release part 18 (i.e., the area-increase portion 19) bite into the thermally-conductive member 140 and further the thermally-conductive member 140 bites into the numerous pits 19v formed in the area-increase portion 19, increasing the contact area Sn between the heat release part 18 and the thermally-conductive member 140. In the present embodiment, the specific surface area Sb of the area-increase portion 19 is about 5 times larger than the specific surface area Sa before the area increasing treatment. Thus, the contact area Sn between the heat release part 18 entirely made as the area-increase portion 19 and the thermally-conductive member 140 is also about 5 times larger, compared to the case where the heat release part 18 includes no area-increase portion 19. In particular, the contact area Sn between the heat release part 18 and the thermally-conductive member 140 may be set about 3 to 20 larger than that between a heat release part 18 with no area-increase portion 19 and the thermally-conductive member 140.

The contact area Sn between the heat release part 18 of each battery 1 and the thermally-conductive member 140 can be determined by for example observing the cross-section of contact portions of the heat release part 18 and the thermally-conductive member 140 under an optical microscope.

In the battery pack 100 in the present embodiment, the numerous protrusions 19t formed in the area-increase portion 19 bite into the thermally-conductive member 140 and also the thermally-conductive member 140 bites into the numerous pits 19v formed in the area-increase portion 19, so that the contact area Sn between the heat release part 18 of each of the batteries 1 and the thermally-conductive member 140 is increased. This configuration allows for good heat conduction from the heat release part 18 of each battery 1 to the thermally-conductive member 140, appropriately cooling each battery 1.

The disclosure is described in the foregoing embodiment, but is not limited thereto. The disclosure may be embodied in other specific forms without departing from the essential characteristics thereof.

For instance, the above-described embodiment shows, as one example, the battery pack 100 in which the batteries 1 are stacked in a single row; however, a battery pack may be configured such that a plurality of batteries 1 are stacked in multiple rows.

In the above-described embodiment, the batteries 1 included in the same battery pack 100 are connected in series, but electric connection between the batteries 1 is not limited to this and the batteries 1 may be connected in parallel.

### Reference Signs List

- 1: Battery (Power storage device)
- 7: Insulation holder
- 10: Case
- 11: Case outer surface
- 18: Heat release part
- 19: Area-increase portion
- 19t: Protrusion
- 19v: Pit
- 21: Case inner surface
- 28A, 28B: Electrode close-contact portion
- 40: Electrode body
- 100: Battery pack (Power storage device cooling structure)
- 120: Battery module
- 130: Cooler
- 130m: Cooling surface
- 140: Thermally-conductive member (Thermally-conductive material)
- Sa: Specific surface area (of area-increase portion before area increasing treatment)
- Sb: Specific surface area (of area-increase portion after area increasing treatment)
- Sc: Specific surface area (of portions of case outer surface, except for area-increase portion)
- Sd: Specific surface area (of case inner surface)
- Sn: Contact area (between heat release part of battery and thermally-conductive member)

## Claims

1. A power storage device (1) comprising:
an electrode body (40); and
a case (10) made of metal, in which the electrode body (40) is housed,
the case (10) has a case outer surface (11) exposed to outside,
the case outer surface (11) includes a heat release part (18), which faces a cooling surface (130m) of a cooler (130) and dissipates heat of the electrode body (40) toward the cooling surface (130m) via a thermally-conductive material (140),
**characterized in that** the heat release part (18) of the case outer surface (11) includes
an area-increase portion (19) with numerous protrusions (19t) and numerous pits (19v) formed by an area increasing treatment to increase a specific surface area (Sb) of the area-increase portion.

2. The power storage device (1) according to claim 1, wherein
the case (10) has a case inner surface (21) exposed to inside,
the case inner surface (21) includes an electrode close-contact portion (28A,28B) that is in direct or indirect close-contact with the electrode body (40), and
the specific surface area (Sb) of the area-increase portion (19) of the case outer surface (11) is larger than a specific surface area (Sd) of the electrode close-contact portion (28A,28B) of the case inner surface (21).

3. The power storage device (1) according to claim 1 or 2, wherein only at least a part of the heat release part (18) of the case outer surface (11) is subjected to the area increasing treatment.

4. A power storage device cooling structure (100) comprising:
the power storage device (1) according to any one of claims 1 to 3,
the cooler (130); and
the thermally-conductive material (140) interposed between the heat release part (18) of the case outer surface (11) and the cooling surface (130m) of the cooler (130),
**characterized in that**
the numerous protrusions (19t) of the area-increase portion (19) bite into the thermally-conductive material (140), and the thermally-conductive material (140) bites into the numerous pits (19v) of the area-increase portion (19), increasing a contact area (Sn) between the heat release part (18) of the power storage device (1) and the thermally-conductive material (140).
